Europäisches Patentamt

European Patent Office

Office européen des brevets

(11) Veröffentlichungsnummer : **0 087 591**
**B1**

(12) **EUROPÄISCHE PATENTSCHRIFT**

(45) Veröffentlichungstag der Patentschrift :
07.05.86

(51) Int. Cl.⁴ : **H 02 P   3/24**

(21) Anmeldenummer : **83100806.5**

(22) Anmeldetag : **28.01.83**

(54) Schaltungseinrichtung für Gleichstrombremsung eines Wechselstrommotors.

(30) Priorität : **10.02.82 DE 3204587**

(43) Veröffentlichungstag der Anmeldung :
**07.09.83 Patentblatt 83/36**

(45) Bekanntmachung des Hinweises auf die Patenterteilung : **07.05.86 Patentblatt 86/19**

(84) Benannte Vertragsstaaten :
**AT CH FR LI SE**

(56) Entgegenhaltungen :
  **EP-A- 0 071 937**
  **DE-A- 2 035 004**
  **DE-A- 2 855 330**
  **Patent Abstracts of Japan Band 1, Nr. 32, 29. März 1977 Seite 1459E76**
  **Soviet Inventions Illustrated Woche E01, 17. Februar 1982 Sektion X13**
  **Soviet Inventions Illustrated Woche E20, 30. Juni 1982 Sektion X13**

(73) Patentinhaber : **Licentia Patent-Verwaltungs-GmbH Theodor-Stern-Kai 1**
**D-6000 Frankfurt/Main 70 (DE)**

(72) Erfinder : **Scholz, Horst, Ing.(grad.)**
**Silbkestrasse 72**
**D-4788 Warstein 2 (DE)**
Erfinder : **Vollmar, Wilfried, Ing.(grad.)**
**An der Schlenke 14**
**D-4770 Soest-Deiringsen (DE)**

(74) Vertreter : **Lertes, Kurt, Dr. et al**
**Licentia Patent-Verwaltungs-GmbH Theodor-Stern-Kai 1**
**D-6000 Frankfurt/M 70 (DE)**

## Beschreibung

Die Erfindung bezieht sich auf eine Schaltungseinrichtung für Gleichstrombremsung eines Einphasen-Wechselstrommotors mit aus einer Hilfswicklung und zusätzlich einer Reaktanz bestehenden Hilfsphase oder eines Drehstrommotors in Steinmetzschaltung oder in Sternschaltung, welche Motoren jeweils über Phasenleiter mit Ein-Schaltgliedern sowie einen schaltgliedfreien Phasenleiter an ein Wechselstromnetz angeschlossen sind und die jeweils durch einen einphasigen Bremsstromkreis mit dem Netz verbunden sind der Bremsstromkreis besteht aus einem ersten Teilstromkreis mit einem Thyristor und mindestens einem zu den Ein-Schaltgliedern antivalent betätigten Ruhekontakt in Reihenschaltung und verbindet den schaltgliedfreien Phasenleiter über die Hilfswicklung der Motorhilfsphase eines Einphasen-Wechselstrommotors bzw. eines Drehstrommotors in Steinmetzschaltung mit der zweiten Netzphase des Einphasen-Wechselstromnetzes, hingegen bei einem Drehstrommotor in Sternschaltung den Sternpunkt mit einer Netzphase des Drehstromnetzes, an der ein Phasenleiter mit einem Ein-Schaltglied angeschlossen ist, einem zweiten Teilstromkreis mit dem erwähnten Ruhekontakt, einer Freilaufdiode und der Hilfswicklung des Einphasen-Wechselstrommotors bzw. mindestens einer Wicklung des Drehstrommotors in Steinmetzschaltung oder der mit dem schaltgliedfreien Phasenleiter verbundenen Wicklung des Drehstrommotors in Sternschaltung.

Bei einer solchen in der EP-A-71 937 beschriebenen und gemäß Art. 54(3) zu berücksichtigenden Einrichtung fließt im Bremsbetrieb in den oben angegebenen Fällen ein wirksamer, großer Teil des Bremsstromes aus dem Wechselstromnetz über die Hilfswicklung der Hilfsphase des Einphasen-Wechselstrommotors bzw. über eine Hauptwicklung des einphasig betriebenen Drehstrommotors in Steinmetzschaltung bzw. des Drehstrommotors in Sternschaltung, und fließt über den geschlossenen Ruhekontakt und den Thyristor in das Wechselstromnetz zurück. Der Bremsstrom fließt in den Zeitabschnitten, in denen der Thyristor gesperrt ist, über die Freilaufdiode weiter. Ein Teil des Bremsstromes fließt über die Hauptwicklung des Motors und die erwähnte Reaktanz (Anlaßkondensator) der Motorhilfsphase bzw. über eine Hauptwicklung und die betreffende Reaktanz des Drehstrommotors in Steinmetzschaltung bzw. über die den Phasenleitern des Drehstrommotors zugeordneten Motorwicklungen, in welchen Phasenleitern je ein Ein-Schaltglied liegt, das der Bremsstrom umgeht.

Wird der Motor vom Bremsbetrieb auf Antrieb umgeschaltet, dann wird der Bremsstrom durch den Ruhekontakt unterbrochen. An dem nun geöffneten Ruhekontakt kann ein Lichtbogen auftreten, und infolge hiervon kann sich vorübergehend ein Kurzschlußstrom ausbilden, der aus dem Netz über das nun geschlossene Ein-Schaltglied und den Lichtbogen fließt, und zwar fließt dieser Strom über die erwähnte Reaktanz, den Kondensator der Motorhilfsphase des Einphasen-Wechselstrommotors bzw. des Drehstrommotors in Steinmetzschaltung, wodurch der Strom begrenzt wird.

Ein möglicher Kurzschlußstrom, der unter entsprechenden Bedingungen beim Umschalten vom Bremsbetrieb auf Antrieb eines Drehstrommotors in Sternschaltung auftritt, fließt über mindestens eine Motorwicklung und wird hierdurch begrenzt.

Die der Erfindung zugrunde liegende Aufgabe besteht in einer weiteren Ausbildung der eingangs angegebenen Schaltungseinrichtung und in einer Verbesserung derselben dahingehend, daß im Bremsbetrieb der gesamte Bremsstrom durch die erwähnte Hilfswicklung und gegebenenfalls die Hauptwicklung und nicht zum Teil auch durch die Reaktanz, den Kondensator, fließt, welcher Teil keine Bremswirkung hat, und daß der Bremsstrom beim Drehstrommotor in Sternschaltung durch mindestens zwei Motorwicklungen fließt und ferner im Falle des Antriebs eines Einphasen-Wechselstrommotors mit Hilfsphase die Kurzschlußstrombegrenzung voll erhalten wird, im Falle des Antriebs des Drehstrommotors in Sternschaltung dieser Kurzschlußstrom verhindert wird. Die Lösung dieser Aufgaben ergibt sich gemäß der Erfindung mit einer Schaltungseinrichtung, die die im Patentanspruch 1 ferner aufgeführten Merkmale zusätzlich aufweist.

Weiteren Ausgestaltungen der Erfindung sind den Unteransprüchen zu entnehmen.

In der Zeichnung sind Ausführungsbeispiele der Erfindung dargestellt und nachstehend beschrieben. Es zeigen :

Figur 1 eine Schaltungseinrichtung für Gleichstrombremsung eines Einphasen-Wechselstrommotors mit Hilfsphase ;

Figur 2 eine Variante der Schaltungseinrichtung nach Fig. 1 ;

Figur 3 eine Schaltungseinrichtung für Gleichstrombremsung eines Drehstrommotors in Sternschaltung ;

Figur 4 eine Schaltungseinrichtung nach Fig. 3, bei der der Drehstrommotor drei zu einem Dreieck schaltbare Wicklungen aufweist ;

Figur 5 eine Schaltungseinrichtung nach Fig. 4 mit geringerem Schaltmittelaufwand.

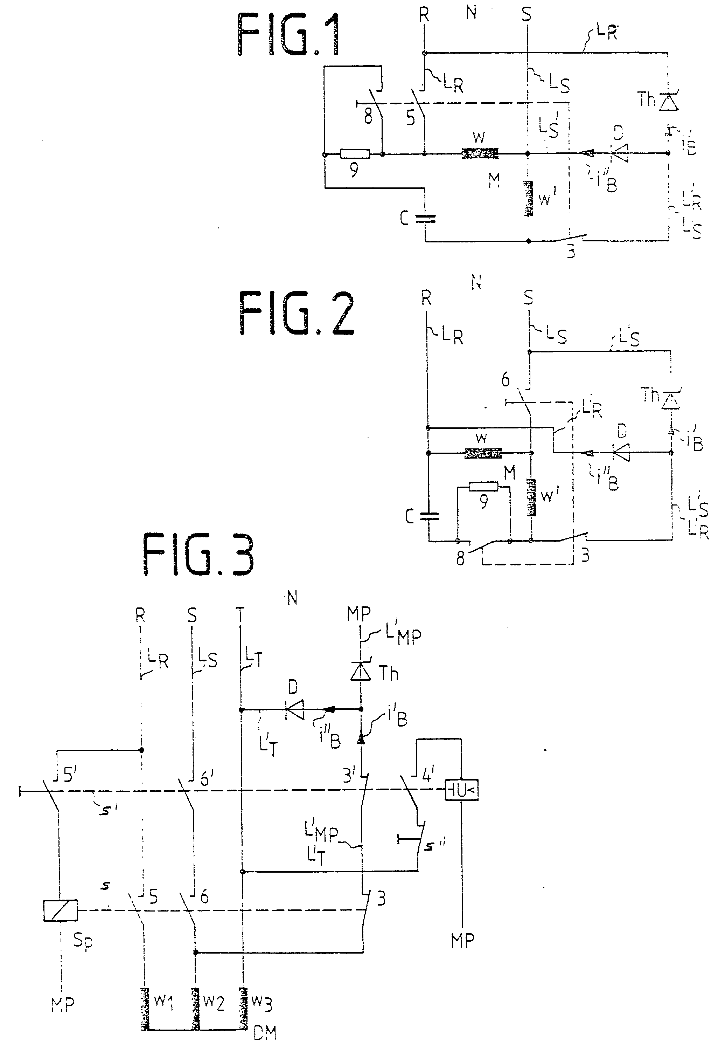

Mit einer Schaltungseinrichtung nach Fig. 1 oder 2 ist ein Einphasen-Wechselstrommotor M mit sog. Hilfsphase, einer Reihenschaltung einer Hilfswicklung w' und einer Reaktanz C, ein Anlaßkondensator, — diese Reihenschaltung liegt parallel zur Hauptwicklung w des Motors —, durch zwei Phasenleiter $L_R$ und $L_S$ an die Netzphasen R und S eines Einphasen-Wechselstromnetzes N anschließbar. Ein dafür zu betätigendes Ein- Schaltglied 5 liegt im Phasenleiter

$L_R$. Der Phasenleiter $L_S$ ist schaltgliedfrei (Fig. 1). Der Motor M ist durch einen einphasigen Bremsstromkreis, eine gesteuerte Gleichrichterschaltung mit einem Thyristor Th, dem sogenannten Bremsthyristor, und einer Diode D mit dem Netz N verbunden.

Der Bremsstromkreis besteht aus zwei Teilstromkreisen $L'_R$ und $L'_S$. im ersten Teilstromkreis $L'_R$ liegen in Reihe ein zum Ein-Schaltglied 5 antivalent betätigter Ruhekontakt 3 und der erwähnte Thyristor Th. Hierdurch sind der Mittenpunkt m der Motorhilfsphase und über die Hilfswicklung w' der schaltgliedfreie Phasenleiter $L_S$ mit der Netzphase R und dem Ein-Schaltglied 5 verbunden. Im zweiten Teilstromkreis $L'_S$ liegen die erwähnten Elemente Ruhekontakt 3 und Diode D in Reihe mit der Hilfswicklung w'. Hierdurch besteht mit w' und D ein Stromkreis für den Freilaufstrom $i''_B$ des Bremsstromes $i_B = i'_B + i''_B$. Insoweit ist diese Schaltungseinrichtung in der deutschen Patentanmeldung P 31 31 846.0 beschrieben.

Die Schaltungseinrichtung nach Fig. 1 enthält zusätzlich ein gleichzeitig mit dem Ein-Schaltglied 5 betätigtes Ein-Schaltglied 8, das in dem Stromzweig der Reaktanz C der Motorhilfsphase liegt. Das Ein-Schaltglied 8 kann, wie in den Figuren 1 und 2 gezeigt, in dem Stromzweig vor oder nach C angeordnet sein. Mit Hilfe des Schaltgliedes 8 kann die Reaktanz beim Übergang vom Antreiben zum Bremsen des Motors von dessen Wicklungen w und w' abgetrennt werden. Gegebenenfalls kann ein ohmscher Widerstand 9 im Nebenschluß der Schaltstrecke von 8 vorgesehen werden, der als Entladewiderstand für den Kondensator C dient.

Durch die Abtrennung der Reaktanz C von den Motorwicklungen w und w' im Bremsbetrieb führt die Hilfswicklung w' den ganzen Bremsstrom, denn ohne Abtrennung würde ein von der Größe der Reaktanz abhängiger Teil des Bremsstromes im Nebenschluß der Hilfswicklung über die Hauptwicklung und die Reaktanz fließen. Der Teilstrom ist infolge der Kapazität C ein Wechselstrom, der keinen Beitrag zur Bremsung liefert und den Bremsstromkreis nur unnötig belastet (vgl. oben, Würdigung des Standes der Technik). Überdies treten Verluste im Stromkreis auf.

Hingegen ist beim Übergang vom Bremsen zum Antreiben des Motors die Reaktanz nicht mehr abgetrennt. Da der Bremsstrom mittels des Ruhekontaktes abgeschaltet wird, kann ein Lichtbogen an dem öffnenden Ruhekontakt 3 auftreten und, wenn dann die Netzphase R gerade positiv gegenüber der Phase S ist, ein Kurzschlußstrom über das nunmehr geschlossene Ein-Schaltglied 5, den Lichtbogen des Ruhekontaktes und die Diode D von R nach S fließen. Durch die Reaktanz C wird dieser Kurzschlußstrom wirksam begrenzt.

Von der in Fig. 1 dargestellten Schaltungseinrichtung unterscheidet sich deren Variante nach Fig. 2 lediglich dadurch, daß das Ein-Schaltglied 6 in dem Phasenleiter $L_S$ liegt und daß der Phasenleiter $L_R$ schaltgliedfrei ist. Im Bremsbetrieb fließt der Bremsstrom $i'_B$, da dann das offene Ein-Schaltglied 8 die Reaktanz C von den Motorwicklungen w und w' absperrt, von der Netzphase R über die Hauptwicklung w und die Hilfswicklung w' des Einphasenmotors M, den geschlossenen Ruhekontakt 3 und den Thyristor Th zur Netzphase S. Der volle, d. h. ungeteilte Bremsstrom fließt mithin über beide Motorwicklungen, und es ist für eine gleich große Bremswirkung ein kleinerer Bremsstrom erforderlich. Ebenfalls wird ein beim Umschalten der Einrichtung vom Bremsbetrieb in den Antriebsbetrieb des Motors möglicher Kurzschlußstrom durch die Hilfswicklung w' begrenzt.

Die gleichen Wirkungen, nämlich Erhöhung der Bremswirkung des Bremsstromes und Begrenzung eines möglichen Kurzschlußstromes, ergeben sich mit einer Schalteinrichtung für Gleichstrombremsung eines einphasig betriebenen Drehstrommotors in Steinmetzschaltung. Je nach Schaltung der Motorwicklungen und der Motorhilfsphase fließt der Bremsstrom über zwei oder sogar drei Motorwicklungen, so daß gute Bremswirkung erreicht wird.

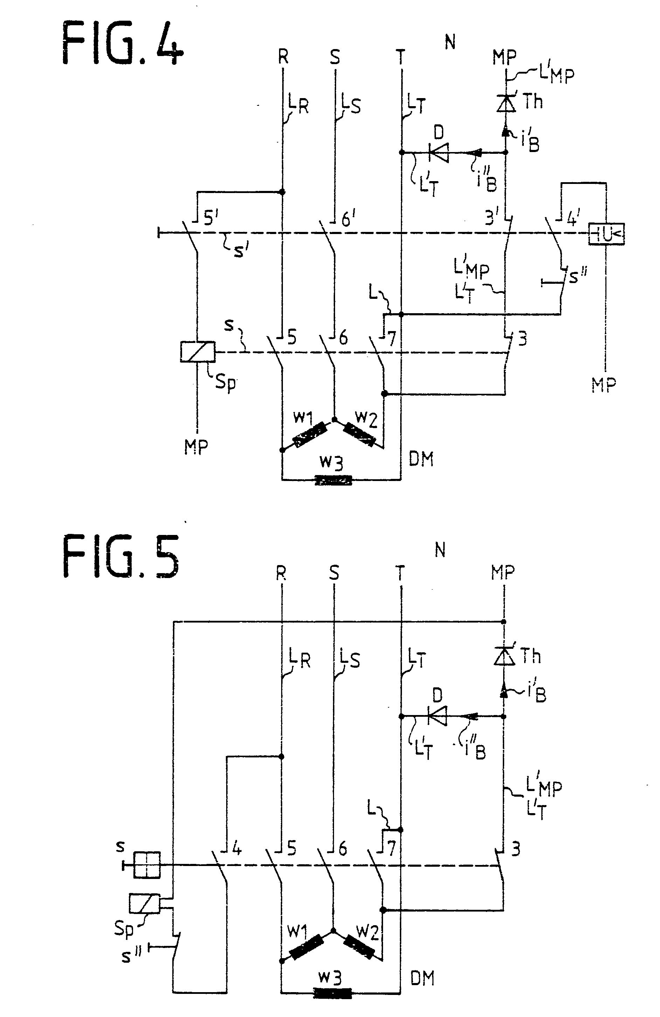

Mit einer Schaltungseinrichtung nach Fig. 3 oder Fig. 4 ist ein Drehstrommotor DM durch drei Phasenleiter $L_R$, $L_S$, $L_T$ an die drei Netzphasen R, S, T eines Drehstromnetzes anschließbar. Die dafür zu betätigenden Ein-Schaltglieder sind ein Ein-Schaltglied 5 im Phasenleiter $L_R$, und zwei Ein-Schaltglieder 6, 6' im Phasenleiter $L_S$, in Reihe geschaltet. Der Phasenleiter $L_T$ ist hier schaltgliedfrei. Der Motor DM ist durch einen einphasigen Bremsstromkreis, eine gesteuerte Gleichrichterschaltung mit einem Thyristor Th und einer Diode D mit dem Drehstromnetz, und zwar mit der Netzphase T und dem Mittelpunktleiter MP verbunden. Der Bremsstromkreis besteht aus zwei Teilstromkreisen, nach Fig. 3 und Fig. 4 aus einem ersten Teilstromkreis $L'_{MP}$ und einem zweiten $L'_T$. Nach Fig. 3 sind die Wicklungen des Motors DM im Stern geschaltet. Im Teilstromkreis $L'_{MP}$ liegen in Reihe zumindest je ein zu den Schaltgliedern 5, 6 und 6' jeweils antivalent betätigter Ruhekontakt 3 und 3' und der Thyristor Th. Hierdurch sind das Ein-Schaltglied 6 des Phasenleiters $L_S$ und die Motorwicklung w2 mit MP verbunden. Durch den Teilstromkreis können ein Ein-Schaltglied und die zugeordnete Motorwicklung auch mit einer korrespondierenden Netzphase verbunden sein. Im zweiten Teilstromkreis $L'_T$ liegen zumindest wiederum die erwähnten Ruhekontakte 3 und 3', die in den beiden Teilstromkreisen zugleich liegen, und die Diode D in Reihe mit der Reihenschaltung der Motorwicklungen w2 und w3, wodurch ein Freilaufstromkreis wie in den Figuren 1 und 2 besteht. Nach Fig. 4 sind die Wicklungen des Motors DM zum offenen Dreieck in Reihe geschaltet. Der erste Teilstromkreis $L'_{MP}$ verbindet das freie Ende der in Reihe geschalteten Motorwicklungen w2, w1, w3 über Ruhekontakte 3, 3' und Thyristor Th mit MP. Im zweiten Teilstromkreis $L'_T$ liegen Ruhekontakte 3, 3' und Diode D in Reihe mit der Reihenschaltung der Motorwicklungen w2, w1, w3 und bilden wie bei den Schaltungseinrichtungen nach den Figuren 1 bis 3 den Stromkreis für den Freilaufstrom i"$_B$ des Bremsstromes i$_B$.

Des weiteren enthalten die Schaltungseinrichtungen nach Fig. 3 und Fig. 4 je zwei Schalteinrichtungen, die mit s und s' bezeichnet sind. Mit diesen stehen die Ein-Schaltglieder 5 und 6 in Wirkungsverbindung derart, daß die Ein-Schaltglieder 5 und 6 sowie auch Ruhekontakt 3 der ersten Schalteinrichtung S zugeordnet sind und jeweils zeitlich verzögert nach Betätigung der zweiten Schalteinrichtung s' geschlossen bzw. geöffnet werden. Mit Hilfe einer Erregerspule Sp, die der Schalteinrichtung S zugeordnet ist und in einem beispielsweise den Phasenleiter L$_R$ über ein der zweiten handbetätigten Schalteinrichtung S' zugeordnetes Ein-Schaltglied 5' mit MP verbindenden Erregerstromkreis liegt, werden die Schaltglieder 5 und 6 und Ruhekontakt 3 betätigt. Die Schalteinrichtung s' steht in Wirkungsverbindung mit einem Selbsthaltekontakt 4' eines Unterspannungsrelais und mittelbar mit einem handbetätigten Aus-Schalter s", die in einem eine Netzphasenspannung, z. B. u$_T$, erfassenden Stromkreis liegen.

Die Schalteinrichtungen s und s' können auch Bestandteile der Schaltungseinrichtung nach Fig. 4 sein. Bei dieser ist noch ein drittes Ein-Schaltglied 7 eingeordnet, das gleichzeitig mit 5 und 6 betätigt wird und in einem von dem schaltgliedfreien Phasenleiter L$_T$ abzweigenden Leiter L liegt, der mit dem erwähnten freien Ende der Reihe der zum offenen Dreieck geschalteten Motorwicklungen von DM verbunden ist. Beim Antreiben des Motors sind dessen Wicklungen durch das Schaltglied 7 im Dreieck geschaltet.

Unter Verwendung jeweils der Schaltung des ersten Teilstromkreises L'$_{MP}$ bei den Schaltungseinrichtungen nach Fig. 3 und 4 sowie der Schalteinrichtungen s und s' wird folgendes bewirkt und erreicht :

In der Schaltung des ersten Teilstromkreises L'$_{MP}$ der Schaltungseinrichtung nach Fig. 3 fließt im Bremsbetrieb der Bremsstrom i'$_B$ durch zwei Motorwicklungen in Reihenschaltung anstatt nur durch eine Wicklung, was bei der Schaltungseinrichtung der Fall ist, von der die vorliegende Erfindung ausgeht. In der Schaltung des Bremsstromkreises nach Fig. 4 fließt der Bremsstrom sogar durch drei Wicklungen. Da die Bremswirkung dem Produkt von Bremsstromstärke und Windungszahl der Motorwicklung proportional ist, kann man mit mehr Wicklungswindungen bei gleichbleibender Bremswirkung den Bremsstrom entsprechend verringern oder bei gleichbleibendem Bremsstrom die Bremswirkung verstärken.

Zum Einschalten des Antriebs wird das Ein-Schaltglied 5' der Schalteinrichtung s' von Hand betätigt, und über Kontakt 3' der gleichen Schalteinrichtung wird der Bremsstromkreis geöffnet. Nach dem Schließen von 5' wird die Erregerspule Sp oder Schützspule erregt, die Schalteinrichtung s zieht an, und es werden die Ein-Schaltglieder 5 und 6 geschlossen. Dabei wird auch der Ruhekontakt 3 des Bremsstromkreises geöffnet.

Zum Ausschalten des Antriebs wird der Aus-Schalter s" offengetastet. Der Selbsthaltekontakt 4' fällt dadurch ab, der Kontakt 3' schließt und das Ein-Schaltglied 5' wird wieder geöffnet, so daß die Schützspule Sp entregt wird und danach die Schaltglieder 5 und 6 abfallen und ferner mit Ruhekontakt 3 der Bremsstrom eingeschaltet wird.

Durch Betätigung des Schaltgliedes 5' von Hand wird auch die Umschaltung vom Bremsbetrieb auf Antrieb des Motors DM eingeleitet. An dem dann öffnenden Ruhekontakt 3' entsteht ein Schaltlichtbogen, jedoch kann vom Netz her kein Kurzschlußstrom über den Ruhekontakt und Diode D fließen, wenn die Ein-Schaltglieder 5, 6 noch abgefallen sind. Diese ziehen durch die Erregung der Spule Sp über den geschlossenen Kontakt 5' zeitlich verzögert an, wenn der Lichtbogen bereits gelöscht ist, so daß der Ruhekontakt 3 stromfrei offengeschaltet wird.

Trotzdem kann, je nach dem wie der Umschaltzeitpunkt in Bezug auf die Phasenlage des Drehstromnetzes gewählt wird, beim Umschalten vom Antreiben zum Bremsen ein Kurzschlußstrom auftreten. Für solche Fälle ist, um Kurzschlußstrom zu verhindern, ein zweites, gleichzeitig mit dem Ein-Schaltglied 5' von s' betätigtes Ein-Schaltglied 6' (oben erwähnt) in Reihe mit Ein-Schaltglied 6 in dem betreffenden Phasenleiter (L$_S$) liegend vorgesehen. Damit wird beim Umschalten in den Bremsbetrieb mit s' das Schaltglied 6' schon vor dem Schließen des Ruhekontaktes 3 durch s' geöffnet. Ein am Schaltglied 6' auftretender Lichtbogen ist beim Schließen des Ruhekontaktes 3 der Schalteinrichtung s bereits gelöscht, so daß kein Kurzschlußstrom mehr auftreten kann.

Das erwähnte Ein-Schaltglied 6' und der Ruhekontakt 3' der Schalteinrichtung S' können bei der Einrichtung nach Fig. 4 entfallen, da zwischen einem Ein-Schaltglied 5 oder 6 und dem Ruhekontakt 3 mindestens eine Motorwicklung liegt.

Für eine wirksame Gleichstrombremsung eines Drehstrommotors im Dreiphasenbetrieb mit drei in Reihe geschalteten Motorwicklungen nach Fig. 4, die vom offenen Dreieck zur Dreieckschaltung schaltbar sind, sowie auch für kurzschlußfreies Umschalten des Motors vom Bremsbetrieb in den Antriebsbetrieb und umgekehrt ist vorteilhaft auch eine Schaltungseinrichtung zu verwenden, die in Fig. 5 dargestellt ist. Diese zeichnet sich gegenüber der Einrichtung nach Fig. 4 dadurch aus, daß sie den vorangehend angegebenen Anforderungen mit einer einzigen Schalteinrichtung s vollauf genügt. Mit dieser stehen in Wirkungsverbindung (s. Fig. 5) die Ein-Schaltglieder 5 und 6 sowie auch ein Schaltglied 7, das in einem vom schaltgliedfreien Phasenleiter L$_T$ zu dem freien Ende der in Reihe geschalteten Motorwicklungen w1, w2, w3 abzweigenden Leiter L liegt, mittels welchen Schaltgliedes diese Wicklungen vom offenen Dreieck im Bremsbetrieb zur Dreieckschaltung beim Antreiben des Motors DM und umgekehrt schaltbar sind, ferner mindestens ein Ruhekontakt 3 des Bremsstromkreises L'$_{MP}$, L'$_T$. Der Schalteinrichtung s ist ein mit dieser betätigter Selbsthaltekontakt 4 zugeordnet, der mit einer Erregerspule Sp zusammenwirkt. Der Kontakt 4 und die Erregerspule sind mit einem Aus-Schalter s″ in einem die Netzphase R mit dem Mittelpunktleiter MP verbindenden Stromkreis in Reihe geschaltet. Im Bremsbetrieb fließt der Bremsstrom von der Netzphase T durch alle drei Motorwicklungen über den Ruhekontakt 3 und den Thyristor Th zum Mittelpunktleiter MP. Der Bremsstrom fließt, jeweils während Th gesperrt ist, als Freilaufstrom i″$_B$ ebenfalls durch die drei Motorwicklungen, den Ruhekontakt und die Diode D weiter. Durch Betätigung der Schalteinrichtung s wird die Umschaltung zum Antreiben des Motors bewirkt. Hierdurch werden zuerst der Kontakt 4 und dann die Ein-Schaltglieder 5, 6 und 7 gleichzeitig geschlossen, der Ruhekontakt 3 wird geöffnet. Durch die Benutzung einer handbetätigten Schalteinrichtung ist der am öffnenden Ruhekontakt 3 entstehende Lichtbogen gelöscht, wenn die Ein-Schaltglieder 5, 6, 7 zeitverzögert durch entsprechend lange Schaltwege schließen.

Bei der Umschaltung vom Antreiben zum Bremsen des Motors, die durch Betätigung des Aus-Schalters s″ eingeleitet wird, wodurch der Kontakt 4 zum Abfallen gebracht wird, gleichzeitig die Ein-Schaltglieder 5, 6, 7 geöffnet werden und der Ruhekontakt 3 geschlossen wird, kann sich beim Bestehen von Lichtbögen an den Ein-Schaltgliedern ebenfalls kein Kurzschluß ausbilden, da jeweils durch mindestens eine Motorwicklung der Stromanstieg verhindert und ein Lichtbogen am Ein-Schaltglied 7 durch Verzögerung der Zündung des Thyristors Th ausgeschlossen wird.

**Patentansprüche**

1. Schaltungseinrichtung für Gleichstrombremsung eines Einphasen-Wechselstrommotors (11) mit aus einer Hilfswicklung (W') und zusätzlich einer Reaktanz (C) bestehenden Hilfsphase oder eines Drehstrommotors (11) in Steinmetzschaltung oder in Sternschaltung, die jeweils über Phasenleiter mit Ein-Schaltgliedern (5, 6) sowie einen schaltgliedfreien Phasenleiter (L$_S$ oder L$_T$) an ein Wechselstromnetz angeschlossen sind und die jeweils durch einen einphasigen Bremsstromkreis mit dem Netz verbunden sind, der Bremsstromkreis besteht aus einem ersten Teilstromkreis (L'$_R$) mit einem Thyristor (Th) und mindestens einem zu den Ein-Schaltgliedern (5, 6, 6') antivalent betätigten Ruhekontakt (3) in Reihenschaltung und verbindet den schaltgliedfreien Phasenleiter über die Hilfswicklung der Motorhilfsphase eines Einphasen-Wechselstrommotors bzw. eines Drehstrommotors in Steinmetzschaltung mit der zweiten Netzphase des Einphasen-Wechselstromnetzes, hingegen bei einem Drehstrommotor in Sternschaltung den Sternpunkt mit einer Netzphase des Drehstromnetzes, an der ein Phasenleiter mit einem Ein-Schaltglied angeschlossen ist, oder mit dem Mittelpunktleiter (MP) des Drehstromnetzes, einem zweiten Teilstromkreis (L'$_S$) mit dem erwähnten Ruhekontakt (3), einer Freilaufdiode (D) und der Hilfswicklung des Einphasen-Wechselstrommotors bzw. mindestens einer Wicklung des Drehstrommotors in Steinmetzschaltung oder der mit dem schaltgliedfreien Phasenleiter verbundenen Wicklung des Drehstrommotors in Sternschaltung, ferner liegt ein gleichzeitig mit dem Ein-Schaltglied (5, 6) betätigtes, gegebenenfalls durch einen Widerstand (9) überbrücktes Ein-Schaltglied (8) im Stromzweig der Reaktanz (C) der Hilfsphase eines Einphasen-Wechselstrommotors (M) oder eines einphasig betriebenen Drehstrommotors in Steinmetzschaltung, oder es sind Ein-Schaltglieder (5, 6, 6') in den Phasenleitern (L$_R$, L$_S$) eines Drehstrommotors (DM) im Dreiphasenbetrieb vorgesehen, von welchen die Schaltglieder (5 und 6) in Wirkungsverbindung mit einer ersten (s) und das Schaltglied (6') mit einer zweiten Schalteinrichtung (s') stehen und die Ein-Schaltglieder der ersten Schalteinrichtung jeweils zeitlich verzögert nach Betätigung der zweiten Schalteinrichtung (s') geschlossen bzw. geöffnet werden, und mindestens zwei Hauptwicklungen (w2, w3) des Drehstrommotors im Dreiphasenbetrieb und mindestens je ein zu den Ein-Schaltgliedern (5, 6, 6') antivalent betätigter Ruhekontakt (3, 3') der Schalteinrichtungen (s, s') liegen in Reihe in den beiden Brems-Teilstromkreisen (L'$_{MP}$, L'$_T$), und der Bremsthyristor (Th) ist mit dem Mittelpunktleiter (MP) des Drehstromnetzes oder einem Phasenleiter mit einem Ein-Schaltglied verbunden.

2. Schaltungseinrichtung nach Anspruch 1, dadurch gekennzeichnet, daß die Ein-Schaltglieder (5, 6) der Phasenleiter (L$_R$, L$_S$) elektromagnetisch mit Hilfe einer Erregerspule (Sp) der ersten Schalteinrichtung (s) schaltbar sind, die in einem den Ruhekontakt (3) des Bremsstromkreises antivalent betätigenden, einen Phasenleiter (L$_R$) über ein Ein-Schaltglied (5') der handbetätigten zweiten Schalteinrichtung (s') mit dem Mittelpunktleiter (MP) des Drehstromnetzes verbindenden Erregerstromkreis liegt, und daß die Schalteinrichtung (s') in Wirkungsverbindung mit einem bei Unterspannung des Netzes betätigten Selbsthaltekontakt (4') und mittelbar mit einem handbetätigten Aus-Schalter (s″) steht, die in einem eine Phasenspannung (u$_T$) des Drehstromnetzes abfühlenden Stromkreis liegen.

3. Schalteinrichtung nach Anspruch 2, dadurch gekennzeichnet, daß ein mit den Ein-Schaltgliedern (5, 6) gleichzeitig betätigtes Ein-Schaltglied (7) in einem von einem schaltgliedfreien Phasenleiter (L$_T$) abzweigenden Leiter (L) liegt, welcher mit dem freien Ende der Reihenschaltung von zum offenen Dreieck geschalteten Motorwicklungen (w1, w2, w3) eines Drehstrommotors (DM) verbunden ist.

4. Schaltungseinrichtung nach Anspruch 3, dadurch gekennzeichnet, daß das freie Ende dieser Reihenschaltung der Motorwicklungen (w1, w2, w3) durch den ersten Teilstromkreis (L'$_{MP}$) des Bremsstromkreises mit dem Mittelpunktleiter (MP) des Drehstromnetzes (N) verbunden ist und die Reihenschaltung (w1, w3) durch den zweiten Teilstromkreis (L'$_T$) geschlossen ist und daß die Ein-Schaltglieder (5, 6, 7) und mindestens ein Ruhekontakt (3) in Wirkungsverbindung mit einer einzigen, handbetätigten Schalteinrichtung (s) stehen, welcher ein damit betätigter, mit einer Erregerspule (Sp) zusammenwirkender Selbsthaltekontakt (4) zugeordnet ist, die in Reihe mit einem Aus-Schalter (s″) in einem eine Netzphase (R) mit dem Mittelpunktleiter verbindenden Erregerstromkreis liegen.

## Claims

1. Circuit equipment for direct current braking of a single-phase alternating current motor (11) with an auxiliary phase consisting of an auxiliary winding (W') and additionally of a reactance (C) or a polyphase alternating current motor (11) in Steinmetz connection or in star connection, which are respectively connected by way of phase conductors with switch-on members (5, 6) as well as a phase conductor (L$_S$ or L$_T$) free of switching members to an alternating current mains and which are respectively connected through a single-phase braking current circuit with the mains, the braking current circuit consists of a first partial current circuit (L'$_R$) with a thyristor (Th) and at least one rest contact (3), which is operated in opposite sense to the switch-on members (5, 6, 6'), in series connection and connects the phase conductor free of switching members by way of the auxiliary winding of the auxiliary motor phase of a single-phase alternating current motor or of a polyphase alternating current motor in Steinmetz connection with the second mains phase of the single-phase alternating current mains, whereagainst in the case of a polyphase alternating current motor in star connection it connects the star point with a mains phase of the polyphase alternating current mains, to which a phase conductor with a switch-on member is connected, or with the neutral conductor (MP) of the polyphase alternating current mains, a second partial current circuit (L'$_S$) with the mentioned rest contact (3), a freewheel diode (D) and the auxiliary winding of the single-phase alternating current motor or at least one winding of the polyphase alternating current motor in Steinmetz connection or that winding of the polyphase alternating current motor in star connection, which is connected with the phase conductor free of switching members, a switch-on member (8), which is actuated simultaneously with the switch-on member (5, 6) and in a given case bridged over by a resistor (9), furthermore lies in the current branch of the reactance (C) of the auxiliary phase of a single-phase alternating current motor (M) or of a polyphase alternating current motor operated in single phase in Steinmetz connection or switch-on members (5, 6, 6') are provided in the phase conductors (L$_R$, L$_S$) of a polyphase alternating current motor (DM) in three-phase operation, of which the switching members (5 and 6) stand in effective connection with a first (s) and the switching member (6') with a second switching equipment (s') and the switch-on members of the first switching equipment are each respectively closed or opened with a time delay after actuation of the second switching equipment (s'), and at least two main windings (w2, w3) of the polyphase alternating current motor in three-phase operation and at least one respective rest contact (3, 3'), which is operated in opposite sense to the switch-on members (5, 6, 6'), of the switching equipments (s, s') lies in series in both the partial braking current circuits (L'$_{MP}$, L'$_T$) and the braking thyristor (Th) is connected with the neutral conductor (MP) of the polyphase alternating current mains or with a phase conductor with a switch-on member.

2. Circuit equipment according to claim 1, characterised thereby, that the switch-on members (5, 6) of the phase conductors (L$_R$, L$_S$) are switchable electromagnetically with the aid of an excitation coil (S$_P$) of the first switching equipment (s), which lies in an excitation current circuit actuating the rest contact (3) of the braking current circuit in opposite sense and connecting a phase conductor (L$_R$) by way of a switch-on member (5') of the manually actuated second switching equipment (s') with the neutral conductor (MP) of the polyphase alternating current mains, and that the switching equipment (s') stands in effective connection with a holding contact (4') actuated in the case of undervoltage of the mains and indirectly with a manually actuated off-switch (s″), which lies in a current circuit sensing a phase voltage (u$_T$) of the polyphase alternating current mains.

3. Switching equipment according to claim 2, characterised thereby, that a switch-on member (7) actuated simultaneously with the switch-on members (5, 6) lies in a conductor (L), which branches off from a phase conductor (L$_T$) free of switching members and is connected with the free end of the series connection of motor windings (w1, w2, w3) of a polyphase alternating current motor (DM), which are connected into an open triangle.

4. Circuit equipment according to claim 3, characterised thereby, that the free end of this series connection of motor windings (w1, w2, w3) is connected through the first partial current circuit (L'$_{MP}$) of the braking current circuit with the neutral conductor (MP) of the polyphase alternating current mains (N) and the series connection (w1, w3) is closed through the second partial current circuit (L'$_T$) and that the switch-on members (5, 6, 7) and at least one rest contact (3) stand in effective connection with a single, manually actuated switching equipment (s), which is associated with a holding contact (4), which is actuable thereby and co-operates with an excitation coil (S$_P$), which lie in series with an off-switch (s″) in an excitation current circuit connecting a mains phase (R) with the neutral conductor.

## Revendications

1. Dispositif de freinage en continu d'un moteur monophasé (11) à phase auxiliaire, constituée par un enroulement auxiliaire (w') et une réactance (C), ou d'un moteur triphasé (11) en couplage Steinmetz ou en étoile, relié au réseau alternatif par des conducteurs de phase avec des conjoncteurs (5, 6), un conducteur de phase sans conjoncteur (L$_S$ ou L$_T$) et un circuit de freinage monophasé, constitué par un premier circuit partiel (L'$_R$) comprenant un thyristor (Th) en série avec au moins un contact de repos (3) actionné en opposition avec les conjoncteurs (5, 6, 6') et connectant le conducteur de phase sans conjoncteur, par l'intermédiaire de l'enroulement de la phase auxiliaire d'un moteur monophasé ou d'un moteur triphasé en couplage Steinmetz, à la seconde phase du réseau mono, ou, dans le cas d'un moteur triphasé couplé en étoile, le point neutre à une phase du réseau triphasé à laquelle est relié un conducteur de phase avec conjoncteur, ou au conducteur neutre (MP) du réseau triphasé ; un second circuit partiel (L'$_S$) comprenant ledit contact de repos (3), une diode de récupération (D) et l'enroulement auxiliaire du moteur monophasé, au moins un enroulement du moteur triphasé en couplage Steinmetz ou l'enroulement du moteur triphasé couplé en étoile, relié au conducteur de phase sans conjoncteur ; un conjoncteur (8) shunté le cas échéant par une résistance (9) et actionné simultanément avec le conjoncteur (5, 6) est en outre inséré dans la branche de la réactance (C) de la phase auxiliaire d'un moteur monophasé (M) ou d'un moteur triphasé en couplage Steinmetz fonctionnant en monophasé, ou des conjoncteurs (5, 6, 6') sont prévus dans les conducteurs de phase (L$_R$, L$_S$) d'un moteur triphasé (DM) fonctionnant en triphasé, une liaison fonctionnelle étant établie entre les conjoncteurs (5 et 6) et un premier dispositif de commutation (s), ainsi qu'entre le conjoncteur (6') et un second dispositif de commutation (s'), et les conjoncteurs du premier dispositif de commutation (s) se fermant ou s'ouvrant chacun avec un retard après la manœuvre du second dispositif de commutation (s') ; au moins deux enroulements principaux (w2, w3) du moteur triphasé fonctionnant en triphasé et au moins un contact de repos (3, 3') des dispositifs de commutation (s, s'), actionné en opposition avec les conjoncteurs (5, 6, 6'), sont en série dans les deux circuits partiels de freinage (L'$_{MP}$, L'$_T$) ; et le thyristor de freinage (Th) est relié au conducteur neutre (MP) du réseau triphasé ou à un conducteur de phase comprenant un conjoncteur.

2. Dispositif selon revendication 1, caractérisé en ce que les conjoncteurs (5, 6) des conducteurs de phase (L$_R$, L$_S$) sont commutables électromagnétiquement à l'aide d'une bobine d'alimentation (Sp) du premier dispositif de commutation (s), qui est insérée dans un circuit d'alimentation actionnant en opposition le contact de repos (3) du circuit de freinage et reliant un conducteur de phase (L$_R$) au conducteur neutre (MP) du réseau triphasé par l'intermédiaire d'un conjoncteur (5') du second dispositif de commutation (s') commandé manuellement ; et une liaison fonctionnelle est établie entre le dispositif de commutation (s') et un contact d'auto-maintien (4') actionné en cas de sous-tension du réseau et, indirectement, un rupteur (s″) à commande manuelle, qui sont insérés dans un circuit déterminant la tension de phase (u$_T$) du réseau triphasé.

3. Dispositif selon revendication 2, caractérisé en ce qu'un conjoncteur (7), actionné simultanément avec les conjoncteurs (5, 6), est inséré dans un conducteur dérivé d'un conducteur de phase (L$_T$) sans conjoncteur et relié à l'extrémité libre du couplage en série des enroulements (w$_1$, w$_2$, w$_3$) d'un moteur triphasé (DM) couplés en triangle ouvert.

4. Dispositif selon revendication 3, caractérisé en ce que l'extrémité libre de ce couplage en série des enroulements (w$_1$, w$_2$, w$_3$) du moteur est reliée par le premier circuit partiel (L'$_{MP}$) du circuit de freinage au conducteur neutre (MP) du réseau triphasé (N), et le couplage en série (w$_1$, w$_3$) est fermé par le second circuit partiel (L'$_T$) ; et les conjoncteurs (5, 6, 7) et au moins un contact (3) présentent une liaison fonctionnelle avec un seul dispositif de commutation (s) à commande manuelle, auquel est affecté un contact d'auto-maintien (4) actionné avec ce dernier, interagissant avec une bobine d'alimentation (Sp), lesdits éléments étant insérés en série avec un rupteur (s″) dans un circuit d'alimentation reliant une phase du réseau (R) au conducteur neutre.

FIG.1

FIG.2

FIG.3

# FIG.4

# FIG.5